# EUROPÄISCHE PATENTSCHRIFT

(11) **EP 0 766 024 B1**
(45) Veröffentlichungstag und Bekanntmachung des Hinweises auf die Patenterteilung: **17.07.2002**
(21) Anmeldenummer: 96112772.7
(22) Anmeldetag: 08.08.1996
(51) Int. Cl.: F16H 59/60

(54) **Gangwechselsteuerung für Automatikgetriebe in Kraftfahrzeugen mit einem elektronischen Steuergerät**
Speed change control of automatic transmission in motor vehicles with an electronic control unit
Système de commande de changement de vitesse pour transmission automatique des véhicules automobiles avec une commande électronique

(30) Priorität: 29.09.1995 DE 19536512
(43) Veröffentlichungstag der Anmeldung: 02.04.1997
(73) Patentinhaber: Bayerische Motoren Werke Aktiengesellschaft, 80788 München (DE)
(72) Erfinder: Braess, Hans-Hermann, Prof. Dr., 82031 Grünwald (DE); Reichart, Günter, 85551 Kirchheim (DE)

(56) Entgegenhaltungen:
- DE-A- 4 205 979
- DE-A- 4 337 163
- US-A- 4 929 434
- PATENT ABSTRACTS OF JAPAN vol. 018, no. 539 (P-1812), 13.Oktober 1994 & JP 06 187595 A (AQUEOUS RES:KK), 8.Juli 1994,

## Beschreibung

Die Erfindung bezieht sich auf eine Gangwechselsteuerung für Automatikgetriebe in Kraftfahrzeugen mit einem elektronischen Steuergerät nach dem Oberbegriff des Patentanspruchs 1 bzw. 2.

Eine bekannte Gangwechselsteuerung ist beispielsweise im ATZ-Artikel "Die Adaptive Getriebesteuerung für die Automatikgetriebe der BMW Fahrzeuge mit 12-Zylinder-Motor", 9/1992, Seite 428 ff., beschrieben. Das elektronische Steuergerät erhält zur Gangwechselsteuerung eine Vielzahl von Betriebsparametern des Fahrzeuges als Eingangssignale, wie den Drosselklappenwinkel, die Fahrgeschwindigkeit, die Raddrehzahlen, das Motorantriebsmoment, die Fahrzeuglängs- sowie die Fahrzeugquerbeschleunigung, die Motordrehzahl und die Abtriebsdrehzahl. Die adaptive Getriebesteuerung führt eine fahrer- und situationsangepaßte Gangwechselsteuerung auch mittels der sogenannten "Fahrertyp-Erkennung", "Umwelt-Erkennung" und "Fahrsituations-Erkennung" durch. Durch die "Fahrertyp-Erkennung" wird in Abhängigkeit von Betriebsparametern, die den Fahrerwunsch wiedergeben, ermittelt, ob eine eher wirtschaftliche oder eher sportliche Fahrweise gewünscht ist. Mittels der Funktionsblöcke "Umwelt-Erkennung" und "Fahrsituations-Erkennung" werden in Abhängigkeit von Betriebsparametern des Fahrzeugs indirekt mit hoher Wahrscheinlichkeit vorliegende Umgebungsbedingungen, wie glatte Fahrbahn, Bergfahrt, Kurvenfahrt oder stop-and-go-Betrieb, ermittelt. Für die Gangwechselsteuerung stehen unterschiedliche Schaltprogramme in Form von Hoch- und Rückschaltkennlinien zur Auswahl, die z. B. in Abhängigkeit von der "Fahrertyp-Erkennung" oder der "Umwelt-Erkennung" aktiviert werden. Die Gangwechselsteuerung wird grundsätzlich entsprechend dem jeweils ausgewählten Schaltprogramm durchgeführt. Sie kann jedoch, beispielsweise in Abhängigkeit vom Ergebnis der sog. "Fahrsituations-Erkennung", durch weitere Funktionen, wie z. B. durch eine Hochschaltunterdrückung, eine Rückschaltunterdrückung oder ein sofortiges Auslösen einer Rückschaltung, abgeändert werden.

Diese bekannte Gangwechselsteuerung erreicht eine situationsangepaßte Fahrweise jedoch nur kurzzeitig für eine bereits eingetretene Fahrsituation, die durch Betriebsparameter des Fahrzeugs jeweils nur für den momentan vorliegenden Zeitpunkt ermittelt wird. Durch diese Momentanadaption ist bei sich häufig ändernden Betriebsparametern des Fahrzeugs eine ungewollte Erhöhung der Schalthäufigkeit und somit eine Komfortverschlechterung möglich. Auch liegt eine indirekt durch Betriebsparameter ermittelte Umgebungsbedingung (z.B. stop-and-go Verkehr) nicht mit absoluter Sicherheit tatsächlich vor bzw. besteht nur sehr kurzzeitig.

Weiterhin sind aus der US-A-4829434, der DE-A-4205979 und der JP-A-62292947 elektronische Gangwechselsteuerungssysteme für Automatikgetriebe bekannt, die zum Teil auch Daten von Navigationssystemen verarbeiten. Insbesondere die JP-A-62292947 zeigt eine Gangwechselsteuerung in Abhängigkeit von Informationen aus einem Navigationssystem, durch die Straßenbedingungen um das Fahrzeug, wie z.B. Kurvenfahrt oder Niederreibwert, berücksichtigt werden können.

Es ist Aufgabe der Erfindung, eine Gangwechselsteuerung eingangs genannter Art derart zu verbessern, daß eine Komfortoptimierung, insbesondere durch Reduzierung der Schalthäufigkeit, bessere Zuordnung von Eingriff und tatsächlichen Fahrsituationsbedingungen und Verringerung der notwendigen Fahrereingriffe, erreicht wird. Weiterhin soll vorzugsweise auch der Kraftstoffverbrauch reduziert und die Fahrsicherheit gesteigert werden.

Diese Aufgabe wird durch die Merkmale des Patentanspruchs 1 und 2 gelöst. Vorteilhafte Weiterbildungen der Erfindung sind die Gegenstände der Unteransprüche.

Erfindungsgemäß steuert das elektronische Steuergerät die Gangwechsel auch in Abhängigkeit von Eingangssignalen, die von außerhalb des Fahrzeuges gebildeten Informationen erhalten werden und die Umgebungsbedingungen des Fahrzeuges wiedergeben.

Außerhalb des Fahrzeuges gebildete Informationen über Umgebungsbedingungen des Fahrzeuges werden beispielsweise durch Satellitennetzwerke (GPS), Radio-Daten-Systeme (RDS, European Radio Data System), Mobilfunkeinrichtungen, elektronische Verkehrsschilder und/oder für Fahrzeug-Navigationssysteme digital gespeicherte Landkarten mit Straßen- und Ortskennzeichnungen zur Verfügung gestellt. Es ist zudem denkbar entsprechende Informationen auch mit optischen Sensoren zu erfassen und mittels Bildverarbeitung im Fahrzeug verfügbar zu machen. Sämtliche Informationen können beispielsweise von einer im Fahrzeug vorhandenen Zentraleinheit, wie einem Navigationssystem, empfangen und an das elektronische Steuergerät weitergegeben werden. Es ist jedoch auch möglich, das elektronische Steuergerät derart auszubilden, daß es die Informationen selbst empfangen und weiterverarbeiten kann.

Diese unabhängig vom Fahrzeug zur Verfügung stehenden Informationen über die Umgebungsbedingungen, innerhalb der sich das Fahrzeug bewegt, ermöglichen eine längerfristige, von sich sehr schnell ändernden Betriebsparametern des Fahrzeuges unabhängige Fahrsituations-Erkennung und damit eine stabilere Gangwechselsteuerung. Dies wird im folgenden an einem Beispiel erläutert:
Wird durch ein elektronisches Verkehrsschild die Information zur Verfügung gestellt, daß eine Paßabfahrt mit einer Länge von 30 km folgt, kann hieraus auf die länger anhaltende Umgebungsbedingung "Bergabfahrt" für die vorgegebene Strecke geschlossen werden, bei der kurze Abschnitte ohne Neigung ignoriert werden. Würde die Bergabfahrt nach dem Stand der Technik mittels der Betriebsparameter des Fahrzeuges, insbesondere durch einen Neigungsgeber oder durch den Vergleich der Fahrzeugbeschleunigung mit dem Drosselklappenwinkel, erfaßt werden, würde auf den kurzen Abschnitten ohne Neigung jeweils das Ende einer Bergabfahrt erkannt werden. Eine entsprechende Änderung der Gangwechselsteuerungs-Strategie führt daraufhin üblicherweise zu einer Hochschaltung. Im darauf folgenden, erneut geneigten Abschnitt wird wieder Bergabfahrt erkannt. Dementsprechend wird die Gangwechselsteuerungs-Strategie wieder geändert und beispielsweise eine Rückschaltung veranlaßt. Bei einer "Bergabfahrt"-Erkennung in Abhängigkeit von Betriebsparametern des Fahrzeuges sind demnach komfortverschlechternde Pendelschaltungen möglich.

Vorzugsweise geben die Eingangssignale auch vorausschauend zu erwartende Umgebungsbedingungen wieder.
Der optimale Gang bezogen auf eine neu eingetretene Situation wird somit nicht erst verzögert eingelegt, sondern die Fahrweise kann mit oder vor dem Eintreten einer zu erwartenden Fahrsituation oder Umgebungsbedingung bereits angepaßt werden. Auch kann durch die vorausschauende Wiedergabe der zu erwartenden Umgebungsbedingungen des Fahrzeugs erkannt werden, ob ein häufiger Wechsel von Fahrsituationen mit ständig wiederkehrenden Umgebungsbedingungen vorliegt. In diesem Fall kann durch statistische Auswertung ermittelt werden, welche Umgebungsbedingung am häufigsten zu erwarten ist, und daraufhin die an diese Umgebungsbedingung angepaßte Fahrweise auch bei kurzfristigen Änderungen der Umgebungsbedingung beibehalten werden. Demnach wird durch die erfindungsgemäße Gangwechselsteuerung die Schalthäufigkeit reduziert und die Fahrweise frühzeitig und/oder vorausschauend an eine länger anhaltende Fahrsituation angepaßt.

Beispielsweise gibt ein Eingangssignal die Art der Straße wieder, auf der sich das Fahrzeug befindet. Angepaßt an die Art der Straße kann die Gangwechselsteuerung Maßnahmen zur Reduzierung der Schalthäufigkeit, z. B. bei einer kurvenreichen Landstraße, oder Maßnahmen zur Reduzierung der Abgasemissionen, z. B. bei einer Stadtfahrt, ergreifen. Durch die Art der Straße sind eine Vielzahl von Fahrsituationen vorausschauend erkennbar, z. B. Bergabfahrt, Bergauffahrt, Kurvenfahrt und Geradeausfahrt. Die Art der Straße steht durch die abgespeicherte Landkarte bei Navigationssystemen für Kraftfahrzeuge oder durch elektronische Verkehrsschilder als Information zur Verfügung. Die Art der Straße kann durch deren Kategorie (z.B. Autobahn, Landstraße, Stadtstrecke), durch deren Kurven-, Steigungs- und Gefälleprofile oder durch deren Fahrbahnbeschaffenheit (z.B. Spurrillen, Schotter, Flüsterteer) vorgegeben werden.

Gemäß der Erfindung nach dem Anspruch 1 gibt ein Eingangssignal die Verkehrssituation zumindest auf der Straße wieder, auf der sich das Fahrzeug befindet.

Informationen über die Verkehrssituation stehen beispielsweise durch die bekannten Radiodatensysteme (RDS) zur Verfügung.
Abhängig von der Verkehrssituation kann die Schalthäufigkeit reduziert werden, beispielsweise zur Komforterhöhung bei zähfließendem Verkehr, oder die Fahrsicherheit gesteigert werden, beispielsweise durch eine Rückschaltung zur Reduzierung der Fahrgeschwindigkeit bei Unfallgefahr.

Gemäß der Erfindung nach dem Anspruch 2 gibt ein Eingangssignal die Wetterlage im näheren Umkreis der Straße wieder, auf der sich das Fahrzeug befindet.
Auch die Informationen über die Wetterlage liegen durch das Radiodatensystem RDS vor. Durch die Information der Wetterlage kann die Fahrweise mittels der Gangwechselsteuerung insbesondere zur Steigerung der Fahrsicherheit angepaßt werden. Beispielsweise können bei Glätte bevorzugt höhere Gänge zugelassen und/oder die niedrigsten Gänge verboten werden. Durch die Information der Wetterlage als Eingangssignal für das elektronische Steuergerät kann demnach insbesondere die Fahrstabilität des Fahrzeugs erhöht werden.

Auch kann ein Eingangssignal eine Ortskennzeichnung im näheren Umkreis der Straße sein, auf der sich das Fahrzeug befindet. Derartige Informationen liegen durch die in Navigationssystemen abgespeicherten Stadtpläne oder ebenfalls durch die bekannten Radiodatensysteme RDS vor.
Wird erkannt, daß sich das Fahrzeug beispielsweise in einer smoggefährdete Zone befindet, kann zur Minimierung der Abgasemissionen die Gangwechselsteuerung entsprechend dem Schaltprogramm vorgenommen werden, durch das der geringste Kraftstoffverbrauch erreicht wird. Somit kann die Fahrweise durch die erfindungsgemäße Gangwechselsteuerung auch an Umweltschutzanforderungen angepaßt werden.

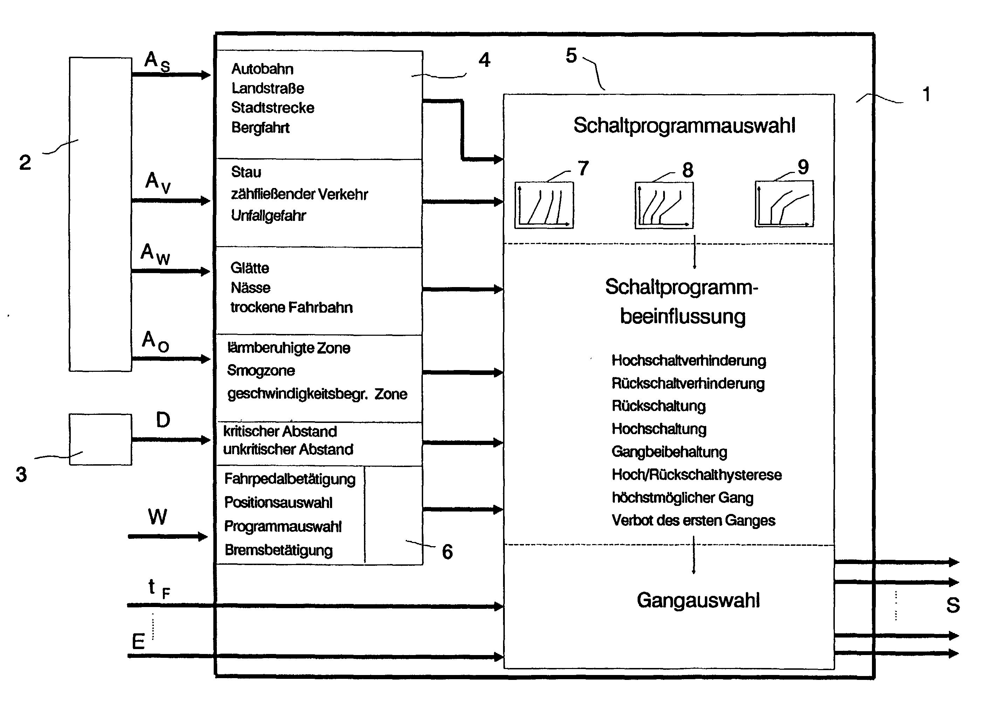

In der Zeichnung ist ein Ausführungsbeispiel der Erfindung dargestellt. Sie zeigt ein elektronisches Steuergerät zur Ausführung der erfindungsgemäßen Gangwechselsteuerung, das u. a. an ein Navigationssystem und an ein Abstandsmeßsystem angeschlossen ist.

Ein elektronisches Steuergerät 1 zur Gangwechselsteuerung für Automatikgetriebe in Kraftfahrzeugen empfängt von einem im Fahrzeug verbauten Navigationssystem 2, das vorzugsweise auch Informationen eines Radio-Daten-Systems (RDS) erhält, vier Eingangssignale: die Art der Straße A_{S}, die Verkehrssituation A_{V}, die Wetterlage A_{W} und eine spezielle Ortskennzeichnung A_{O}. Darüber hinaus werden von weiteren Steuergeräten und/oder Sensoren (hier nicht dargestellt) verschiedene Betriebsparameter des Fahrzeuges als Eingangssignale an das Steuergerät 1 übermittelt, deren Größe durch Betätigungsaktivitäten des Fahrers bestimmt werden und die im dargestellten Ausführungsbeispiel als Fahrerwunschsignale W zusammengefaßt sind. Weiterhin führt von einem Abstandsmeßgerät 3 ein Abstandssignal D an einen Eingang des Steuergeräts 1. Auch wird im dargestellten Beispiel ein Fahrtdauersignal t_{F} an das Steuergerät 1 übermittelt, das beispielsweise von einem Bordcomputer oder ebenfalls vom Navigationssystem 2 in Abhängigkeit von dem eingegebenen Zielort gebildet wird. Darüber hinaus führen verschiedene weitere Eingangssignale E an das Steuergerät 1, die für bekannte Gangwechselsteuerungen übliche Betriebsparameter des Fahrzeugs oder der Brennkraftmaschine wiedergeben. Derartige Eingangssignale E können der Drosselklappenöffnungswinkel, die Fahrzeuggeschwindigkeit, die Brennkraftmaschinendrehzahl, das Antriebsmoment, ein Schlupfwert der Antriebsräder, die Längs- oder Querbeschleunigung, und die Abtriebsdrehzahl sein.

Bei bisher bekannten elektronisch gesteuerten Automatikgetrieben werden bereits auch Fahrerwunschsignale W, wie z. B. die Fahrpedalbetätigung oder die Betätigung der Drosselklappe, die Positonsauswahl durch den Getriebewählhebel, die Programmauswahl (z. B. sportlich "S", wirtschaftlich "E" oder manuell "M") und die Bremsbetätigung, zur Gangwechselsteuerung verwendet. Zur Funktionsweise üblicher Gangwechselsteuerungen wird exemplarisch auf den genannten ATZ-Artikel zur adaptiven Getriebesteuerung verwiesen.

Das durch das Navigationssystem 2 übermittelte Eingangssignal A_{S} zur Bestimmung der Art der Straße kann folgende Informationen enthalten:
Autobahn, Landstraße, Stadtstrecke oder Bergfahrt. Das Eingangssignal A_{V} zur Bestimmung der Verkehrssituation enthält Informationen wie Stau, zähfließender Verkehr oder Unfallgefahr. Das Eingangssignal A_{W} zur Übermittlung der Wetterlage informiert über Glätte, Nässe und trockene Fahrbahn. Das Eingangssignal A_{O} beinhaltet beispielsweise die Information über eine lärmberuhigte Zone, eine Smogzone oder eine geschwindigkeitsbegrenzte Zone.

Insbesondere die Eingangssignale A_{V}, A_{W} und A_{O} können durch bekannte Radio-Daten-Systeme (RDS) oder durch elektrische Verkehrsschilder, deren Informationen vorzugsweise zunächst von dem Navigationssystem 2 empfangen und ausgewertet werden, für das elektronische Steuergerät 1 zur Verfügung gestellt werden. Das Eingangssignal A_{S} wird vorzugsweis aus den gespeicherten Landkarten des Navigationssystems 2 und/oder durch elektronische Verkehrsschilder, die mit dem Navigationssystem 2 kommunizieren, erhalten. Die vier von dem Navigationsystem 2 an das Steuergerät 1 übermittelten Eingangssignale A_{S}, A_{V}, A_{W} und A_{O} geben die näheren Umgebungsbedingungen des Fahrzeugs sowohl für den momentan vorliegenden Zeitpunkt als auch vorausschauend wieder.

Das Abstandssignal D vom Abstandsmeßgerät 3 kann beispielsweise die Information enthalten, ob bezogen auf ein vorausfahrendes Fahrzeug ein kritischer oder unkritischer Abstand bzw. eine hohe Differenzgeschwindigkeit vorliegt, wenn die momentane Fahrzeuggeschwindigkeit beibehalten wird. Das Fahrtdauersignal t_{F} kann durch das Navigationssystem 2 errechnet werden, nachdem der gewünschte Zielort eingegeben ist.

Die Eingangssignale des Steuergerätes 1, A_{S}, A_{V}, A_{W}, A_{O}, D und W, führen zunächst zu einer Auswahleinheit 4. Abhängig von der Information der Eingangssignale, die durch das Navigationssystem 2 übermittelt werden, wird in der Auswahleinheit 4 die momentane und/oder zu erwartende Umgebungsbedingung des Fahrzeuges ermittelt. Die jeweils ermittelte Umgebungsbedingung wird daraufhin an eine Auswerteeinheit 5 weitergegeben.

Die Fahrerwunschsignale W, wie hier die Fahrpedalbetätigung, die Positionsauswahl, die Programmauswahl und die Bremsbetätigung, werden zunächst einer Fahrertyp-Erkennungseinheit 6 weitergeleitet. Der erkannte Fahrertyp wird ebenfalls als Eingangssignal an die Auswerteeinheit 5 weitergegeben. Ebenso erhält die Auswerteeinheit 5 als Eingangssignal die Information "kritischer Abstand" oder "unkritischer Abstand", die durch das Abstandssignal D mitgeteilt wird. Auch das Fahrtdauersignal t_{F} und alle weiteren Eingangssignale E führen an die Auswerteeinheit 5. Die Auswerteeinheit 5 bestimmt in Abhängigkeit von ihren Eingangssignalen den jeweils optimalen einzulegenden Gang. Dieser Gang wird daraufhin mittels der Steuersignale S an die Hydraulikeinheit des Automatikgetriebes eingelegt.

In der Auswerteeinheit 5 liegen verschiedene Schaltprogramme zur Auswahl vor. Beispielsweise können ein sportliches Schaltprogramm 7, ein wirtschaftliches Schaltprogramm 8 und ein Winterschaltprogramm 9 zur Verfügung gestellt werden. Nach Auswahl eines entsprechenden Schaltprogrammes kann dieses Schaltprogramm weiterhin durch verschiedene Logikschaltungen der Auswerteeinheit 5 beeinflußt bzw. verändert werden. In Abhängigkeit von den Eingangssignalen der Auswerteeinheit 5 können beispielsweise eine Hochschaltverhinderung, eine Rückschaltverhinderung, eine sofortige Rückschaltung, eine sofortige Hochschaltung, eine Gangbeibehaltung, eine Veränderung der Hoch-/Rückschalthysterese, das Einlegen des höchstmöglichen Ganges oder ein Verbot des ersten Ganges vorgenommen werden. Nach der Auswahl des Schaltprogramms und deren Beeinflussung wird daraufhin der optimale einzulegende Gang bestimmt..

Im folgenden werden Beispiele zur Erläuterung der erfindungsgemäßen Gangwechselsteuerung, insbesondere im Zusammenhang mit den möglichen Eingangssignalen zur Wiedergabe von fahrzeugunabhängigen Umgebungsbedingungen, aufgeführt.

Befindet sich das Fahrzeug auf der Autobahn als mitgeteilte Art der Straße, wird die Auswerteeinheit 5 die Gangwechsel vorzugsweise derart steuern, daß eine Minimierung der Schalthäufigkeit erreicht wird und bevorzugt höhere Gänge eingelegt werden. Hierzu kann beispielsweise das wirtschaftliche Schaltprogramm 8 ausgewählt werden, und dahingehend beeinflußt werden, daß Rückschaltungen eher verhindert werden. Das wirtschaftliche Schaltprogramm 8 schaltet gegenüber dem sportlichen Schaltprogramm 7 bereits bei niedrigeren Fahrzeuggeschwindigkeiten jeweils in einen höheren Gang. Befindet sich das Fahrzeug dagegen auf der Landstraße, kann die Auswerteeinheit 5 daraus auf häufige Kurvenfahrt schließen, wodurch vorzugsweise auch in Abhängigkeit von weiteren Eingangssignalen der Auswerteeinheit 5 Hochschaltverhinderungen vorgenommen werden. Bei Stadtstrecken, insbesondere in Verbindung mit stop-and-go-Betrieb wird der erste Gang verboten, um einen häufigen Wechsel zwischen Hoch- und Rückschaltungen zu verhindern. Gerade im Stadtverkehr reicht auch der zweite Gang für eine angemessene Anfahrbeschleunigung aus, da bei Stadtstrecken üblicherweise nur eine geringe Fahrleistung angefordert wird. Befindet sich das Fahrzeug hingegen auf einer Bergfahrt, kann durch die Auswerteeinheit 5 eine Gangwechselsteuerung vorgenommen werden, die bevorzugt niedrige Gänge, z. B. durch eine Hochschaltverhinderung, eine aktive Rückschaltung oder eine Gangbeibehaltung, auswählt.

Wird der Auswerteeinheit 5 als Verkehrssituation Stau mitgeteilt, kann entsprechend dem stop-and-go-Betrieb der erste Gang zur Reduzierung der Schalthäufigkeit verboten werden. Liegt zähfließender Verkehr vor, können Gangwechsel durch die Veränderung der Hoch-/Rückschalthysterese verzögert vorgenommen werden, um ebenfalls die Schalthäufigkeit zu reduzieren. Wird Unfallgefahr mitgeteilt, kann eine aktive Rückschaltung, vorzugsweise bei gleichzeitiger akustischer Warnung, zur sofortigen Reduzierung der Fahrzeuggeschwindigkeit vorgenommen werden.

Besteht durch die Wetterlage Glätte-Gefahr, kann zur Erhöhung der Fahrzeugstabilität automatisch das Winterschaltprogramm 9 ausgewählt werden, durch das bereits bei sehr niedrigen Fahrzeuggeschwindigkeiten höhere Gänge im Vergleich mit anderen Schaltprogrammen eingelegt werden und zusätzlich der erste Gang verboten wird. Bei Nässe-Gefahr ist die Auswahl eher höherer Gänge als Reaktion möglich. Liegt trockene Fahrbahn vor, wird die Gangwechselsteuerung zumindest nicht in der Weise beeinflußt, daß eine Reduzierung des Abtriebsmoments, z. B. durch aktive Hochschaltung oder Rückschaltverhinderung, vorgenommen wird.

Befindet sich das Fahrzeug in einer lärmberuhigten Zone als Ortskennzeichnung, wird vorzugsweise eine Gangwechselsteuerung vorgenommen, die die Schalthäufigkeit reduziert und ggf. durch eine Unterdrückung von Rückschaltungen ein Hochdrehen der Brennkraftmaschine verhindert. Enthält die Ortskennzeichnung die Information, daß sich das Fahrzeug in einer Smogzone befindet, wird die Gangwechselsteuerung vorzugsweise derart vorgenommen, daß eine Minimierung des Kraftstoffverbrauchs erreicht wird. Hierzu wird beispielsweise das wirtschaftliche Schaltprogramm ausgewählt und zusätzlich entsprechend einer Abgasminimierung beeinflußt. In einer geschwindigkeitsbegrenzten Zone kann bei überhöhter Geschwindigkeit durch Hochschaltverhinderung oder durch aktive Rückschaltung eine Geschwindigkeitsreduzierung, vorzugsweise im Zusammenhang mit einem optischen oder akustischen Warnsignal, eingeleitet werden.

Weiterhin kann bei einem kritischen Abstand, der durch das Abstandssignal D mitgeteilt wird, ebenfalls eine Hochschaltverhinderung oder eine aktive Rückschaltung zur Geschwindigkeitsreduzierung vorgenommen werden.
Auch in Abhängigkeit von dem Fahrtdauersignal t_{F} kann die Gangwechselsteuerung durch die Auswerteeinheit 5 entsprechend beeinflußt werden. Das Fahrtdauersignal t_{F} wird beispielsweise mit der Information der Reichweite in Abhängigkeit vom Tankinhalt verknüpft. Liegt die momentane Reichweite unterhalb der vorbestimmten Fahrtdauer, kann die Gangwechselsteuerung entsprechend einer Minimierung des Kraftstoffverbrauchs vorgenommen werden. Liegt die Fahrtdauer jedoch unterhalb der Reichweite, wird beispielsweise ohne Einschränkung die Auswahl des sportlichen Schaltprogramms 7 zugelassen.

Insbesondere durch die Eingangssignale, die durch das Navigationssystem 2 im Steuergerät 1 vorliegen, ist es möglich, nicht nur die momentane Fahrtsituation sondern vorausschauend auch längerfristig zu erwartende Umgebungsbedingungen bzw. Fahrsituationen festzustellen. Auch hierauf kann die Fahrweise durch die Gangwechselsteuerung angepaßt werden.

Demnach findet beispielsweise keine Änderung der Gangwechselsteuerung statt, wenn durch die erkannte Umgebungsbedingung (z. B. Landstraße oder Glätte) eine längerfristig gleichbleibende Fahrtsituation (z . B. Kurvenfahrt oder Radschlupfneigung) erwartet wird, die lediglich kurzzeitig unterbrochen wird (z. B. kurze gerade Abschnitte bei kurvenreicher Landstraße oder kurze trockene Fahrbahnabschnitte bei sonst glatter Fahrbahn).

Durch die erfindungsgemäße Gangwechselsteuerung werden demnach sowohl für den momentanen Zeitpunkt als auch vorausschauend der Komfort erhöht, der Kraftstoffverbrauch reduziert, die Fahrsicherheit gesteigert und notwendige Fahrereingriffe verringert.

## Patentansprüche

1. Gangwechselsteuerung für Automatikgetriebe in Kraftfahrzeugen mit einem elektronischen Steuergerät, das die Gangwechsel in Abhängigkeit von Betriebsparametern des Fahrzeuges bestimmt, wobei das elektronische Steuergerät die Gangwechsel auch in Abhängigkeit von Eingangssignalen (A_{S}, A_{V}, A_{W}, A_{O}, D) steuert, die von außerhalb des Fahrzeuges gebildeten Informationen erhalten werden und die Umgebungsbedingungen des Fahrzeuges wiedergeben, **dadurch gekennzeichnet, dass** ein Eingangssignal die Verkehrssituation (A_{V}) zumindest auf der Straße wiedergibt, auf der sich das Fahrzeug befindet.

2. Gangwechselsteuerung für Automatikgetriebe in Kraftfahrzeugen mit einem elektronischen Steuergerät, das die Gangwechsel in Abhängigkeit von Betriebsparametern des Fahrzeuges bestimmt, wobei das elektronische Steuergerät die Gangwechsel auch in Abhängigkeit von Eingangssignalen (A_{S}, A_{V}, A_{W}, A_{O}, D) steuert, die von außerhalb des Fahrzeuges gebildeten Informationen erhalten werden und die Umgebungsbedingungen des Fahrzeuges wiedergeben, **dadurch gekennzeichnet, dass** ein Eingangssignal die Wetterlage (A_{W}) im näheren Umkreis der Straße wiedergibt, auf der sich das Fahrzeug befindet.

3. Gangwechselsteuerung nach Patentanspruch 1 oder 2, **dadurch gekennzeichnet, dass** ein Eingangssignal eine Ortskennzeichnung (A_{O}) im näheren Umkreis der Straße wiedergibt, auf der sich das Fahrzeug befindet.

4. Gangwechselsteuerung nach einem der Patentansprüche 1 bis 3, **dadurch gekennzeichnet, dass** ein Eingangssignal die Art der Straße (A_{S}) wiedergibt, auf der sich das Fahrzeug befindet.

## Claims

1. Gear change control of an automatic transmission in motor vehicles with an electronic control unit which determines the gear changes depending on operating parameters of the vehicle, in which the electronic control unit controls the gear change also depending on input signals (A_{S}, A_{V}, A_{W}, A_{O}, D), which are received from information generated outside the vehicle and return the environmental conditions of the vehicle, **characterised in that** one input signal returns the traffic situation (A_{V}) at least on the roadway where the vehicle is located.

2. Gear change control of an automatic transmission in motor vehicles with an electronic control unit which determines the gear changes depending on operating parameters of the vehicle, in which the electronic control unit controls the gear change also depending on input signals (A_{S}, A_{V}, A_{W}, A_{O}, D), which are received from information generated outside the vehicle and return the environmental conditions of the vehicle, **characterised in that** one input signal returns the weather situation (A_{W}) in the close surroundings of the roadway where the vehicle is located.

3. Gear change control according to Claim 1 or Claim 2, **characterised in that** one input signal returns a location identifier (A_{O}) in the close proximity to the roadway on which the vehicle is located.

4. Gear change control according to one of the Claims 1 to 3, **characterised in that** one input signal returns the type of the roadway (A_{S}) on which the vehicle is located.

## Revendications

1. Système de commande de changement de vitesse pour une transmission automatique d'un véhicule automobile équipé d'un appareil de commande électronique, qui définit le changement de vitesse selon les paramètres de fonctionnement du véhicule,
l'appareil de commande électronique commandant les changements de vitesse également en fonction de signaux d'entrée (A_{S}, A_{V}, A_{W}, A_{O}, D), contenant des informations formées en dehors du véhicule et reproduisant les conditions de l'environnement du véhicule,
**caractérisé en ce que**
un signal d'entrée reproduit au moins l'état de la circulation (A_{V}) sur la chaussée sur laquelle se trouve le véhicule.

2. Système de commande de changement de vitesse pour une transmission automatique d'un véhicule automobile équipé d'un appareil de commande électronique, qui définit le changement de vitesse suivant les paramètres de fonctionnement du véhicule,
l'appareil de commande électronique commandant les changements de vitesse également en fonction des signaux d'entrée (A_{S}, A_{V}, A_{W}, A_{O}, D), contenant des informations formées en dehors du véhicule et reproduisant les conditions de l'environnement du véhicule,
**caractérisé en ce qu'**
un signal d'entrée reproduit la situation météorologique (A_{W}) dans le voisinage immédiat de la chaussée sur laquelle se trouve le véhicule.

3. Système de commande de changement de vitesse selon la revendication 1 ou 2,
**caractérisé en ce qu'**
un signal d'entrée reproduit une caractéristique de lieu (A_{O}) dans le voisinage immédiat de la chaussée où se trouve le véhicule.

4. Système de commande de changement de vitesse selon l'une des revendications 1 à 3,
**caractérisé en ce qu'**
un signal d'entrée reproduit le type de chaussée (A_{S}) sur lequel se trouve le véhicule.
